# EUROPÄISCHE PATENTSCHRIFT

(11) **EP 2 162 662 B1**
(45) Veröffentlichungstag und Bekanntmachung des Hinweises auf die Patenterteilung: **21.03.2012**
(21) Anmeldenummer: 07765466.3
(22) Anmeldetag: 18.06.2007
(51) Int. Cl.: F16L 19/02, F16L 19/028

(54) **VERBINDUNGSANORDNUNG FÜR EINE ROHRVERSCHRAUBUNG**
CONNECTING ARRANGEMENT FOR A PIPE UNION
SYSTÈME DE RACCORDEMENT POUR UN RACCORD VISSÉ

(43) Veröffentlichungstag der Anmeldung: 17.03.2010
(73) Patentinhaber: Weidmann LTD., 53842 Troisdorf (DE)
(72) Erfinder: FELDER, Norbert, 53773 Hennef (DE)
(74) Vertreter: Dörner, Kötter & Kollegen
(86) Internationale Anmeldenummer: PCT/EP2007/056018
(87) Internationale Veröffentlichungsnummer: WO 2008/154951

(56) Entgegenhaltungen:
- WO-A-01/40693
- DE-A1- 19 511 063
- DE-B3-102004 035 354
- GB-A- 2 329 685
- GB-A- 2 355 774
- US-A- 4 805 944
- US-A- 5 961 160

## Beschreibung

Die Erfindung betrifft eine Verbindungsanordnung zum Anschluss eines zylindrischen Rohres oder Rohrabschnittes an einen Anschlusskörper, wobei der Anschlusskörper eine von einer Stirnfläche ausgehende erste kegelige Bohrung, eine an die kegelige Bohrung anschließende erste zylindrische Bohrung zur Aufnahme des Rohres und eine an die erste zylindrische Bohrung anschließende und im Durchmesser reduzierte zweite zylindrische Bohrung aufweist, mit einer Überwurfmutter, die eine Bohrung für das Rohr oder den Rohrabschnitt aufweist, mit einem Gewinde, mit dem die Überwurfmutter auf ein Gegengewinde des Anschlusskörpers aufschraubbar ist, und mit einer kegeligen Bohrung, die sich zur kegeligen Bohrung des Anschlusskörpers entgegengesetzt verjüngt, mit einem benachbart zum Ende des Rohres oder Rohrabschnittes vorgesehenen rundum nach Außen ausgebuchteten Bereich des Rohres, welcher ausgebuchtete Bereich eine mit der kegeligen Bohrung der Überwurfmutter zusammenwirkende und zu dieser kegeligen Bohrung gegengleich ausgebildete Spannfläche aufweist.

Mit derartigen Verbindungsanordnungen sollen Rohrverschraubungen möglich werden. Dabei soll eine insbesondere metallische Rohrleitung an einen eine Aufnahmeöffnung für die Rohrleitung aufweisenden Anschlussstutzen angeschlossen werden. Die Rohrleitung hat benachbart zu ihrem Ende einen rundum nach außen ausgebuchteten Bereich. Sie ist hier also umgeformt, im Regelfall gestaucht.

Eine mit dem Anschlussstutzen verschraubbare Überwurfmutter lässt sich beim Anschließen dieses umgeformten Rohrleitungsendes drehen und übt somit eine Axialbewegung auf diesen ausgebuchteten Bereich aus, der sich zwischen der Überwurfmutter und dem Anschlussstutzen befindet. Eine in der Überwurfmutter befindliche kegelförmige Bohrung, die gegengleich zu einer Spannfläche des ausgebuchteten Bereiches ausgebildet ist, sorgt dann dafür, dass der ausgebuchtete Bereich auf den Anschlussstutzen gezogen wird und er in verschraubter Form dort festgehalten wird.

Eine derartige Konzeption ist beispielsweise aus der DE 195 11 063 C2 bekannt. Der ausgebuchtete Bereich des Rohres enthält dabei einerseits Passagen, die die gegengleiche Spannfläche zum Konuswinkel der Überwurfmutter enthalten, wie auch weitere konusförmige Bereiche, die sich auf der kegeligen Bohrung des Anschlussstutzens abstützen, um ein sicheres Halten auch dort zu ermöglichen. In einzelnen Ausführungsformen wird darüber hinaus auch noch vorgeschlagen, in den verbleibenden Freiräumen zwischen der Außenwandung des Rohres der Innenwandung der Überwurfmutter und der oberen Stirnfläche, des Anschlussstutzens Dichtungen in unterschiedlicher Form anzuordnen, die ringförmig oder scheibenförmig um das Rohr herum liegen.

Aus der DE 101 24 874 Al ist eine weitere Rohrverschraubung mit einer ein Anschlussende umgebenden Ringwulst an einer Rohrleitung bekannt. Dort wird eine ringförmig umlaufende Dichtung in einen Bereich in der kegeligen Bohrung im Anschlussstutzen eingeführt, wobei auch die Ringwulst in diese kegelige Bohrung eingeführt wird, sodass dort eine möglichst zuverlässige Abdichtung erfolgen kann. Außerdem wird ein umlaufender Stützring zwischen Überwurfmutter und den Ringwulst eingelegt, um ein Mitdrehen des Rohres bei der Montage zu vermeiden und eine genormte Überwurfmutter bei unterschiedlichen Steigungen einsetzen zu können Weiterhin ist eine Roherschraubung gemaß dem Oberbegriff des Anspruchss 1 in der US-A-5 961 160 offenbart.

Problematisch ist, dass entweder starke Eingriffe in den Innendurchmesser des Rohrendes vorgenommen werden müssen oder das Ungenauigkeiten bei der Montage und/oder ungünstige Kraftflüsse bei dem Zusammenfügen der einzelnen Elemente auftreten können.

Aufgabe der Erfindung ist es demgegenüber, eine Verbindungsanordnung zum Anschluss zylindrischer Rohre oder Rohrabschnitte an einen Anschlusskörper vorzuschlagen, die einen günstigeren Kraftfluss während des Montagevorganges ermöglicht.

Diese Aufgabe wird bei einer gattungsgemäßen Verbindungsanordnung durch die Merkmale des kennzeichnenden Teils des Patentanspruchs 1 gelöst.

Durch das Vorsehen eines Zwischenringes mit genau den definierten Eigenschaften wird es möglich, die einzelnen Funktionen voneinander zu trennen, die von der Verbindungsanordnung letztlich gewährleistet werden müssen. Dies betrifft insbesondere die Abdichtungsfunktion, die völlig von dem eigentlichen Verbindungsvorgang getrennt werden kann, in dem die Bauelemente separate Eigenschaften zugewiesen bekommen.

Anders als in der DE 101 24 874 Al ist es auch nicht mehr erforderlich, zwei konische Flächen gegeneinander abzudichten, da der gesamte ausgebuchtete Bereich gar nicht mehr in die kegelige Bohrung des Anschlussstutzens hineinragen muss, sondern stattdessen sich außen auf dem dazwischen angeordneten Zwischenring abstützt.

Der Zwischenring ermöglicht neben einer Trennung der verschiedenen Funktionen der Verbindungsanordnung auch eine Anschlagbegrenzung des Rohres. Im Stand der Technik war nicht genau definiert, bis wohin das untere Ende des Rohres bei dem Anschluss an den Anschlussstutzen vordringen kann. Gegebenenfalls war die innere Stirnfläche des Anschlussstutzens zugleich die Anschlagbegrenzung, was zu Übermontagen führen konnte.

Erfindungsgemäß führt der Zwischenring jedoch dazu, dass bewusst ein klein gehaltenes Spiel zwischen dieser Stirnfläche und dem unteren Ende des Rohres angestrebt werden kann, was auch zum Ausgleich von Fertigungstolleranzen bei der Herstellung des ausgebuchteten Bereiches genutzt werden kann.

Außerdem ist es möglich, in einer bevorzugten Ausführungsform eine Weichdichtung in die Verbindungsanordnung zu integrieren und diese Weichdichtung von dem Zwischenring tragen zu lassen. Diese Weichdichtung kann dabei räumlich von dem ausgebuchteten Bereich ebenfalls getrennt werden.

Von besonderem Vorteil ist es außerdem, dass die Verbindungsanordnung so ausgestaltet ist, dass der rundum nach außen ausgebuchtete Bereich des Rohres auf seiner der kegeligen Bohrung der Überwurfmutter abgewandten Seite eine Auflagefläche aufweist, dass der Zwischenring eine Aufstützfläche für diese Auflagefläche aufweist, und dass die Auflagefläche und die Aufstützfläche gegengleich ausgebildet sind.

Dabei ist die Auflagefläche so ausgebildet, dass ihre Steigung zwischen 10° und 15°, insbesondere 11° relativ zur senkrachten zur achsparallelen wandung des Rohres beträgt, wobei diese Steigung in richtung zur Rohrachse nach oben gerichtet ist, also ein Hinterschnitt hinter dem ausgebuchteten Bereich des Rohres entsteht.

Auf diese Weise wird es möglich, eine verbesserte Verteilung und Wirkrichtung der auftretenden Kräfte zu erzielen.

Idealerweise würde die Kraft, die auf das Rohr wirkt, senkrecht auf der Spannfläche der Überwurfmutter stehen. Bei herkömmlichen Verschraubungen steht jedoch die Kraft üblicherweise in einem 45° Winkel auf diese Fläche. Es ist jedoch eine Reduzierung dieses Winkels auf 30 bis 35° möglich, wodurch die radiale Komponente der Kraft reduziert wird.

Der Winkel in einer Größenordnung von 10 bis 15° ist deshalb gewählt, weil sich noch größere Winkel nur mit erheblichem mechanischen Aufwand realisieren lassen und der nun bevorzugte Winkel einen besonders geschickten Kompromiss zwischen den technisch angestrebten und den machbaren Winkeln darstellt.

Die Winkel ermöglichen einen relativ homogenen Kraftfluss.

Eine Übermontage des Systems wird durch die bevorzugte Anordnung des Zwischenrings zuverlässig vermieden. Dem Bediener wird darüber hinaus ein eindeutiges Signal vermittelt, wenn sich das zu verbindende Rohr über den Zwischenring auf den Anschlussstutzen gesetzt hat und damit eine optimale Verbindung erzielt ist.

Die Veränderung der Innenkontur des Rohres in dem ausgebuchteten Bereich ist minimal. Dadurch wird die Strömung geringstmöglich behindert. Dadurch wird einer Geräuschentwicklung besonders aussichtsreich entgegengetreten.

Die benötigte Kraft für die Rohrumformung ist ebenfalls reduziert, da sich die beschriebene Gestaltung des ausgebuchteten Bereichs mit verhältnismäßig wenig Kraft erzielen lässt.

Im Folgenden wird anhand der Zeichnung ein Ausführungsbeispiel der Erfindung näher erläutert. Es zeigen:
- Figur 1: einen Schnitt durch eine erfindungsgemäße Ausführungsform einer Verbindungsanordnung;
- Figur 2: eine Darstellung eines Elementes aus der Figur 1 zur näheren Erläuterung; und
- Figur 3: eine vergrößerte Darstellung eines Details aus Figur 2.

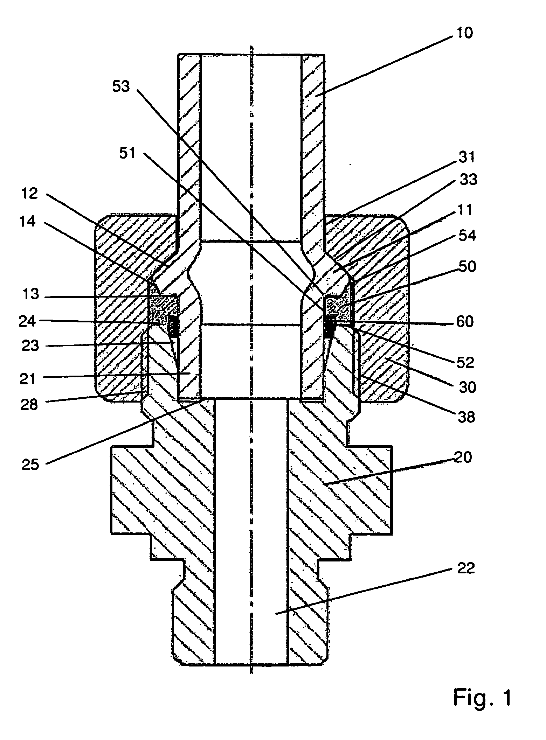

Eine Rohrverschraubung eines Rohres 10 mit einem Anschlusskörper 20 wird in Figur 1 näher erläutert. Das Rohr 10 ist zylindrisch; in der Figur 1 ist beispielhaft ein unteres Ende des Rohres 10 dargestellt, das wesentlich länger sein kann und auch Teil einer Rohrleitungsanordnung sein könnte.

Dieses Rohr 10 wird in einen Anschlusskörper 20 eingesteckt. Der Anschlusskörper 20 besitzt zu diesem Zweck eine erste zylindrische Bohrung 21, die exakt so bemessen ist, dass das Rohr 10 dort hineingesteckt werden kann. Eine zweite Bohrung 22 ist mit einem kleineren Durchmesser ausgestattet. Diese zweite Bohrung 22 setzt die erste Bohrung in Richtung des inneren des Anschlusskörpers 20 fort. Im inneren des Rohres 10 befindliches Medium kann so in die zweite Bohrung 22 gelangen, um dort weiter gefördert zu werden.

Ferner ist eine Stirnfläche 25 vorgesehen, die die erste Bohrung 21 und die zweite Bohrung 22 voneinander trennt.

Eine weitere Stirnfläche 24 ist als äußere Fläche des Anschlusskörpers 20 vorgesehen; dabei geht die erste, äußere zylindrische Bohrung 21 in eine kegelige Bohrung 23 über, die sich in Richtung der Stirnfläche 24 öffnet.

Außen besitzt der Anschlusskörper 20 noch ein Gewinde 28, das zum Verschrauben mit einem Gegengewinde 38 ausgerüstet ist, das noch im Folgenden beschrieben wird.

Auf das Gewinde 28 des Anschlusskörpers 20 kann nämlich eine Überwurfmutter 30 mit diesem Gegengewinde 38 aufgeschraubt werden. Die Überwurfmutter 30 besitzt eine Bohrung 31, durch die das Rohr 10 geführt werden kann. Zwischen der Bohrung 31 und dem Gewinde 38 ist noch ein Abschnitt vorgesehen, bei dem sich die Bohrung durch die Überwurfmutter 30 als kegelige Bohrung 33 in Richtung auf den Anschlusskörper 20 zu erweitert.

Das Rohr 10 besitzt in diesem Bereich benachbart zu seinem Ende einen rundum nach außen ausgebuchteten Bereich 11. Dieser ausgebuchtete Bereich 11 wird durch ein Stauchen des Rohres erzielt. Der Innendurchmesser des Rohres 10 kann im Bereich 11 etwas erweitert sein, wie dies in der Darstellung in Figur 1 zu erkennen ist. Der rundum nach außen ausgebuchtete Bereich 11 ist auf dem gesamten Umfang des Rohres 10 gleich ausgebildet.

Die Ausbuchtung besitzt auf ihrer oberen, vorn dem Anschlusskörper 20 abgewandten Seite einen zu der kegeligen Bohrung 33 der Überwurfmutter 30 passende und zu dieser gegengleich ausgebildete Spannfläche 12. Auch diese Spannfläche 12 ist demzufolge konisch ausgebildet und erweitert sich nach unten in Richtung des Anschlusskörpers 20.

Von der unteren Seite des Rohres 10 her betrachtet ist der rundum nach außen ausgebuchtete Bereich 11 zunächst mit einer in erster Näherung horizontalen Fläche, nämlich einer Auflagefläche 13, ausgerüstet, die noch weiter unten näher beschrieben wird. Diese Auflagefläche 13 geht dann in eine konische Abstützfläche 14 über.

Zwischen dem rundum nach außen ausgebuchteten Bereich 11 des Rohres 10 oder des Rohrabschnittes und dem Anschlusskörper 20 ist ein Zwischenring 50 angeordnet. Auch dieser Zwischenring 50 besitzt eine Bohrung 51 für das Rohr 10 und umgibt dieses Rohr 10. Der Zwischenring 50 kann auch als Adapterelement oder als Haltering bezeichnet werden.

Dieser Zwischenring 50 besitzt eine umlaufende Stützfläche 52, mit der er auf der Stirnfläche 24 des Anschlusskörpers 20 aufliegt.

Außerdem besitzt der Zwischenring 50 angrenzend an die Bohrung 51 eine kegelförmige Bohrung 53. In dieser kegelförmigen Bohrung 53 sitzt der ausgebuchtete Bereich 11 mit seiner Auflagefläche 13 auf dem Zwischenring 50.

Die kegelige Bohrung 53 grenzt ihrerseits an und geht über in eine weitere kegelige Bohrung 53 des Zwischenrings 50, die der konischen Fläche 14 des ausgebuchteten Bereiches gegengleich gegenüberliegt.

Der Zwischenring 50 trägt außerdem ein Weichdichtungselement 60. Dieses Weichdichtungselement 60 befindet sich zwischen der äußeren Wandung des Rohres 10, der kegeligen Bohrung 23 des Anschlusskörpers 20 und einer entsprechenden Trageinrichtung des Zwischenringes 50. Da der Zwischenring 50 ebenfalls an die äußere Wandung des Rohres 10 angrenzt, ist das um das Rohr 10 ebenfalls umlaufende Weichdichtungselement 60 von dem rundum nach außen ausgebuchteten Bereich 11 dauerhaft mechanisch getrennt.

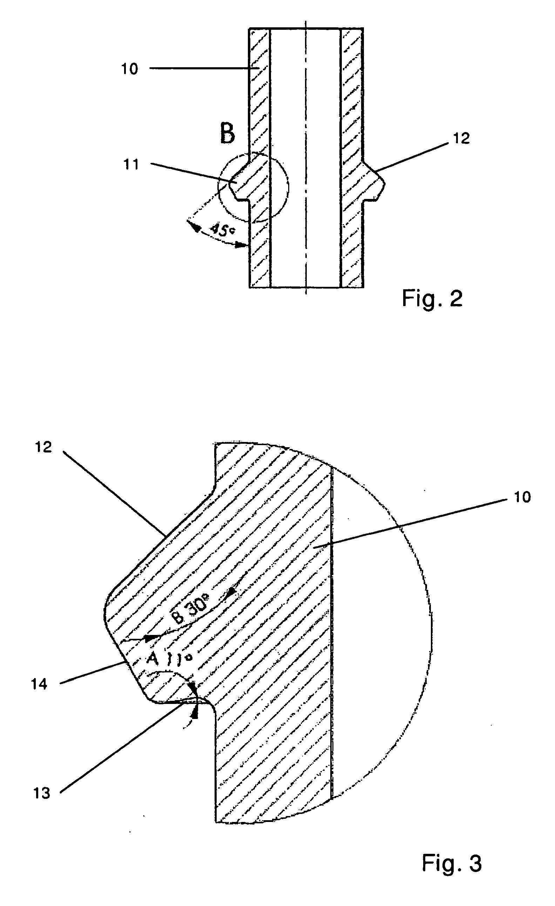

In der Figur 2 ist nochmals separat der hier relevante untere Abschnitt des Rohres 10 herausgezeichnet. Dabei ist hier die innere Bohrung des Rohres 10 anders als in Figur 1 mit konstantem Durchmesser angenommen.

Deutlich zu erkennen ist der rundum nach außen ausgebuchtete Bereich 11. Dieser Bereich 11 ist nach oben durch eine kegelförmige Spannfläche 12 begrenzt. Die Fläche dieser kegelförmigen Spannfläche 12 schließt mit der vertikalen achsparallelen Wandung des Rohres 10 einen Winkel von ungefähr 45° ein, wie in der Figur 2 zu erkennen ist.

Der rundum nach außen ausgebuchtete Bereich 11 des Rohres 10 ist nochmals vergrößert als Einzelheit B in der Figur 3 dargestellt.

Neben der Spannfläche 12 kann man dabei auch erkennen, dass die Unterseite des rundum nach außen ausgebuchteten Bereiches 11 von einer Auflagefläche 13 eingenommen wird. Diese Auflagefläche 13 verläuft ungefähr, bevorzugt jedoch nicht exakt senkrecht zu der achsparallelen Wandung des Rohres 10. Bei genauer Betrachtung schließt sie mit dieser senkrechten einen Winkel von 10 bis 15°, in der bevorzugten dargestellten Ausführungsform von 11° ein. Dabei ist diese Auflagefläche 13 insgesamt wiederum konisch ausgebildet, wobei die Konizität in der gleichen Orientierung, wie die kegelförmige Spannfläche 12 ausgerichtet ist, jedoch wie erwähnt einen anderen Konuswinkel besitzt.

Dabei ist in allen Fällen jeweils darauf geachtet, dass die Konusflächen in die benachbarten Flächen abgerundet übergehen und keine spitzen Kanten vorgesehen sind.

Zwischen den beiden konusförmigen und die gleiche Orientierung besitzenden Flächen 12 und 13 ist eine ebenfalls rundum laufende und konische Fläche 14 vorgesehen.

Neben dem Winkel A von 11°, den die Auflagefläche 13 mit der Horizontalen einschließt, ist noch ein Winkel B von 30° dargestellt. Der Winkel B gibt den Kraftverlauf wieder, bei dem 30°eine Differenzkomponente darstellt.

### Bezugszeichenliste

- 10: Rohr (zylindrisch)
- 11: rundum nach außen ausgebuchteter Bereich des Rohres
- 12: Spannfläche
- 13: Auflagefläche
- 14: konische Fläche

- 20: Anschlusskörper
- 21: Bohrung (erste zylindrische Bohrung für das Rohr 10)
- 22: Bohrung (zweite mit kleinerem Durchmesser)
- 23: kegelige Bohrung
- 24: Stirnfläche, gegen den Zwischenring
- 25: Stirnfläche, gegen das Rohr 10
- 28: Gewinde zum Verschrauben mit Überwurfmutter 30

- 30: Überwurfmutter
- 31: Bohrung für das Rohr 10
- 33: kegelige Bohrung
- 38: Gewinde für Verschraubung mit Anschlusskörper 20

- 50: Zwischenring
- 51: Bohrung für Rohr 10
- 52: Stützfläche gegen Anschlusskörper 20
- 53: Konus gegenüber der Auflagefläche 13 des Bereichs 11
- 54: Konus gegenüber der konischen Fläche 14 des Bereichs 11

- 60: Weichdichtungselement

## Patentansprüche

1. Verbindungsanordnung, umfassend ein zylindrisches Rohr (10) oder Rohrabschnitt, einen Anschlusskörper (20) und eine Überwurfmutter (30), zum Anschluss des Rohres (10) oder Rohrabschnittes an den Anschlusskörper (20), wobei der Anschlusskörper (20) eine von einer Stirnfläche (24) ausgehende erste kegelige Bohrung (23), eine an die kegelige Bohrung (23) anschließende erste zylindrische Bohrung (21) zur Aufnahme des Rohres (10) und eine an die erste zylindrische Bohrung (21) anschließende und im Durchmesser reduzierte zweite zylindrische Bohrung (22) aufweist, wobei die Überwurfmutter (30) eine Bohrung (31) für das Rohr (10) oder den Rohrabschnitt ein, Gewinde (38), mit dem die Überwurfmutter (30) auf ein Gegengewinde (28) des Anschlusskörpers (20) aufschraubbar ist, sowie eine kegelige bohrung (33), die sich zur kegeligen Bohrung (23) des Anschlusskörpers (20) entgegengesetzt verjüngt, aufweist mit einem benachbart zum Ende des Rohres (10) oder Rohrabschnittes vorgesehenen rundum nach außen ausgebuchteten Bereich (11) des Rohres (10) welcher ausgebuchtete Bereich (11) eine mit der kegeligen Bohrung (33) der Überwurfmutter (30) zusammenwirkende, und zu dieser kegeligen Bohrung (33) gegengleich ausgebildete Spannfläche (12) aufweist, wobei ein Zwischenring (50) vorgesehen ist, wobei der Zwischenring (50) eine Bohrung (51) für das Rohr (10) oder den Rohrabschnitt aufweist, wobei der Zwischenring (50) zwischen dem rundum nach außen ausgebuchteten Bereich (11) des Rohres (10) oder Rohrabschnittes und dem Anschlusskörper (20) angeordnet ist, wobei der Zwischenring (50) sich auf der Stirnfläche (24) des Anschlusskörpers (20) abstützt, wobei der rundum nach außen ausgebuchtete Bereich (11) des Rohres (10) auf seiner der kegeligen Bohrung (33) der Überwurfmutter (30) abgewandten Seite eine Auflagefläche (13) aufweist, wobei der Zwischenring (50) eine Aufstützfläche (54) für diese Auflagefläche (13) aufweist, wobei die Auflagefläche (13) und die Aufstützfläche (54) gegengleich ausgebildet sind, **dadurch gekennzeichnet, dass** die Auflagefläche (13) einen umlaufenden Abschnitt aufweist, in welchem sie konisch in gleicher Richtung zur kegelförmigen Spannfläche (12) und kegeligen Bohrung (33) geneigt ist sowie dass die Auflagefläche (13) mit der Senkrechten zur achsparallelen Wandung des Rohres (10) oder des Rohrabschnittes einen Winkel von 10° bis einschließt.

2. Verbindungsanordnung nach Anspruch 1, **dadurch gekennzeichnet, dass** der Zwischenring (50) ein Weichdichtungselement (60) aufweist, und dass das Weichdichtungselement (60) zwischen der Wandung des Rohres (10), dem Zwischenring (50) und der kegeligen Bohrung (23) des Anschlusskörpers (20) das Rohr (10) umlaufend angeordnet ist.

3. Verbindungsanordnung nach Anspruch 1 oder 2, **dadurch gekennzeichnet, dass** die Abmessung des Zwischenrings (50) in Axialrichtung so bemessen ist, dass sich bei einem mit der Verbindungsanordnung an den Anschlusskörper (20) angeschlossenen Rohr (10) oder Rohrabschnitt der Zwischenring (50) mit einer Stützfläche (52) auf der Stirnfläche (24) des Anschlusskörpers (20) abstützt, während das Ende des Rohrs (10) oder Rohrabschnittes noch Spiel gegenüber dem Ende der zylindrischen Bohrung (21) in dem Anschlusskörper (20) aufweist.

4. Verbindungsanordnung nach einem der vorstehenden Ansprüche, **dadurch gekennzeichnet, dass** der rundum nach außen ausgebuchtete Bereich (11) des Rohres (10) von der Auflagefläche (13) aus weiter in einen zweiten Konus (14) übergeht, dass der Konuswinkel des zweiten Konus (14) des ausgebuchteten Bereiches (11) und ein Kegelwinkel einer kegeligen Bohrung (53) des Zwischenrings (50) jeweils gegengleich ausgebildet sind und in gleicher Orientierung , jedoch gegebenenfalls anderer Orientierung zu der kegeligen Bohrung (23) des Anschlusskörpers (20) verlaufen.

5. Verbindungsanordnung nach Anspruch 4, **dadurch gekennzeichnet, dass** der Konuswinkel des zweiten Konus (14) des rundum nach außen ausgebuchteten Bereiches (11) des Rohres (10) oder Rohrabschnittes und der Kegelwinkel der kegeligen Bohrung (53) des Zwischenrings (50) jeweils mehr als 20°, insbesondere etwa 30° (±5°) betragen.

## Claims

1. Connecting arrangement comprising a cylindrical pipe (10) or section of a pipe, a connecting body (20) and a union nut (30) for connecting the pipe (10) or pipe section to the connecting body (20), where the connecting body (20) has a first tapered bore (23) originating from a front surface (24), a first cylindrical bore (21) adjoining the tapered bore (23) to receive the pipe (10) and a second cylindrical bore (22) having a reduced diameter adjoining the first cylindrical bore (21), where the union nut (30) has a bore (31) for the pipe (10) or pipe section, a thread (38) by means of which the union nut (30) can be screwed onto a counter thread (28) of the connecting body (20) and a tapered bore (33) which tapers in the opposite direction to the tapered bore (23) of the connecting body (20), with a circumferential outwardly protruding area (11) of the pipe (10) adjacent to the end of the pipe (10) or pipe section, which outwardly protruding area (11) has a clamping surface (12) mirror-inverted to the tapered bore (33) and interacting with the tapered bore (33) of the union nut (30), where an intermediate ring (50) is provided, where the intermediate ring (50) has a bore (51) for the pipe (10) or the pipe section, where the intermediate ring (50) is arranged between the circumferential outwardly protruding area (11) of the pipe (10) or pipe section and the connecting body (20), where the intermediate ring (50) rests against the front surface (24) of the connecting body (20), where the circumferential outwardly protruding area (11) of the pipe (10) has a contact surface (13) on its side facing away from the tapered bore (33) of the union nut (30), where the intermediate ring (50) has a supporting surface (54) for this contact surface (13), where the contact surface (13) and the supporting surface (54) are mirror-inverted, **characterised in that** the contact surface (13) has a circumferential section in which it is tilted conically in the same direction as the tapered clamping surface (12) and the tapered bore (33) and that the contact surface (13) forms an angle of between 10° and 15° with the wall of the pipe (10) or pipe section vertical to a line parallel with the axis.

2. Connecting arrangement according to claim 1, **characterised in that** the intermediate ring (50) has a soft sealing element (60) and that this soft sealing element (60) is arranged between the wall of the pipe (10), the intermediate ri (50) and the tapered bore (23) of the connecting body (20) arranged around the circumference of the pipe (10).

3. Connecting arrangement according to claim 1 or claim 2, **characterised in that** the intermediate ring (50) is dimensioned in axial direction in such a way that for a pipe (10) or pipe section joined to the connecting body (20) by means of the connecting arrangement, the intermediate ring (50) rests against the front surface (24) of the connecting body (20) by means of a supporting surface (52), while the end of the pipe (10) or pipe section still has a certain clearance in relation to the end of the cylindrical bore (21) in the connecting body (20).

4. Connecting arrangement according to any of the above claims, **characterised in that** the circumferential outwardly protruding area (11) of the pipe (10) continues from the contact surface (13) into a second taper (14), that the taper angle of the second taper (14) of the outwardly protruding area (11) and a taper angle of a tapered bore (53) of the intermediate ring (50) are each mirror-inverted and oriented in the same direction, but may be oriented in a different direction to the tapered bore (23) of the connecting body (20).

5. Connecting arrangement according to claim 4, **characterised in that** the taper angle of the second taper (14) of the circumferential outwardly protruding area (11) of the pipe (10) or pipe section and the angle of the tapered bore (53) of the intermediate ring (50) are both greater than 20° but preferably approximately 30° (± 5°).

## Revendications

1. Système de raccordement comprenant un tube cylindrique (10) ou segment de tube, un corps de raccordement (20) et un écrou à collet (30), pour raccorder le tube (10) ou segment de tube au corps de raccordement (20), sachant que ledit corps de raccordement (20) présente un premier alésage (23) conique partant de la surface frontale (24), un premier alésage cylindrique (21) - dans le prolongement de l'alésage conique (23) - servant à recevoir le tube (10) et un deuxième alésage cylindrique (22) de diamètre inférieur situé dans le prolongement du premier alésage cylindrique (21), sachant que l'écrou à collet (30) présente un alésage (31) pour le tube (10) ou le segment tubulaire, un filetage (38) avec lequel il est possible de visser l'écrou à collet (30) sur un filetage antagoniste (28) du corps de raccordement (20), ainsi qu'un alésage conique (33) qui va en se rétrécissant en direction opposée de l'alésage conique (23) du corps de raccordement (20), avec une zone (11) du tube (10) prévue périphériquement en creux vers l'extérieur au voisinage de l'extrémité du tube (10) ou segment de tube, laquelle zone (11) en creux présente une surface de serrage (12) interagissant avec l'alésage conique (33) de l'écrou à collet (30), et configurée d'une géométrie épousant cet alésage conique (33), sachant qu'un anneau intermédiaire (50) est prévu, sachant que l'anneau intermédiaire (50) présente un alésage (51) pour le tube (10) ou le segment de tube, sachant que l'anneau intermédiaire (50) est agencé entre la zone (11) périphériquement en creux vers l'extérieur du tube (10) ou segment de tube et le corps de raccordement (20), sachant que l'anneau intermédiaire (50) prend appui sur la surface frontale (24) du corps de raccordement (20), sachant que la zone (11) périphériquement en creux à l'extérieur du tube (10) présente une surface d'appui (13) sur son côté ne regardant pas l'alésage conique (33) de l'écrou à collet (30), sachant que l'anneau intermédiaire (50) présente une surface de soutènement (54) pour cette surface d'appui (13), sachant que la surface d'appui (13) et la surface de soutènement (54) présentent des géométries s'épousant, **caractérisé en ce que** la surface d'appui (13) présente un segment périphérique dans lequel elle est inclinée coniquement dans le même sens par rapport à la surface de serrage (12) conique et à l'alésage conique (33), et **en ce que** la surface d'appui (13) forme avec la verticale, et par rapport à la paroi en parallélisme axial du tube (10) ou du segment de tube, un angle compris entre 10° et 15°.

2. Système de raccordement selon la revendication 1, **caractérisé en ce que** l'anneau intermédiaire (50) présente un élément d'étanchéité (60) mou et **en ce que** cet élément d'étanchéité (60) mou est agencé périphériquement autour du tube (10) entre la paroi du tube (10), l'anneau intermédiaire (50) et l'alésage conique (23) du corps de raccordement (20).

3. Système de raccordement selon la revendication 1 ou 2, **caractérisé en ce que** la dimension de l'anneau intermédiaire (50) dans le sens axial a été dimensionnée de telle sorte qu'en présence d'un tube (10) ou segment de tube raccordé avec le système de raccordement contre le corps de raccordement (20), l'anneau intermédiaire (50) s'appuie par une surface de soutènement (52) sur la surface frontale (24) du corps de raccordement (20), tandis que l'extrémité du tube (10) ou segment de tube présente encore du jeu par rapport à l'extrémité de l'alésage cylindrique (21) dans le corps de raccordement (20).

4. Système de raccordement selon l'une des revendications précédentes, **caractérisé en ce que** la zone (11) périphériquement en creux vers l'extérieur du tube (10) devient, en partant de la surface d'appui (13), un deuxième cône (14), **en ce que** l'angle du deuxième cône (14) de la zone (11) en creux et un angle d'un alésage conique (53) de l'anneau intermédiaire (50) sont configurés respectivement pour s'épouser, et qu'ils présentent un tracé de même orientation, toutefois le cas échéant d'une autre orientation relativement à l'alésage conique (23) du corps de raccordement (20).

5. Système de raccordement selon la revendication 4, **caractérisé en ce que** l'angle du deuxième cône (14) de la zone (11) périphériquement en creux vers l'extérieur du tube (10) ou segment de tube, et l'angle de l'alésage conique (53) de l'anneau intermédiaire (50) font respectivement plus de 20°, en particulier environ 30° (+5°).
